(19) Europäisches Patentamt
European Patent Office
Office européen des brevets

(11) **EP 2 947 493 A1**

(12) **EUROPEAN PATENT APPLICATION**

(43) Date of publication:
**25.11.2015 Bulletin 2015/48**

(51) Int Cl.:
*G02B 17/00* (2006.01)   *G02B 17/02* (2006.01)
*G02B 27/01* (2006.01)

(21) Application number: **15158774.8**

(22) Date of filing: **12.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **21.05.2014   JP 2014105255**

(71) Applicant: **Kabushiki Kaisha Toshiba
Tokyo 105-8001 (JP)**

(72) Inventors:
• **Sawada, Shimpei**
  **Tokyo 105-8001 (JP)**
• **Kokojima, Yoshiyuki**
  **Tokyo 105-8001 (JP)**
• **Baba, Masahiro**
  **Tokyo 105-8001 (JP)**

(74) Representative: **Hoffmann Eitle
Patent- und Rechtsanwälte PartmbB
Arabellastraße 30
81925 München (DE)**

(54) **DISPLAY DEVICE**

(57)   According to one embodiment, a display device (100) includes a light emitter (115) and a reflector (130). The light emitter (115) emits light including image information. The reflector (130) has a plurality of reflective surfaces (133) arranged in a first direction. The reflective surfaces (133) reflect a portion of the light. A length in a second direction of one of the reflective surfaces (133) is longer than a length in the first direction of the one of the reflective surfaces (133). The second direction intersects the first direction. A first plane is tilted with respect to a second plane. The first plane includes an incident direction of the light at the reflector (130) and a reflection direction of the light at the reflector (130). The second plane includes the first direction and the second direction. The second direction is tilted with respect to an intersection line between the first plane and the second plane.

FIG. 2

EP 2 947 493 A1

**Description**

FIELD

Embodiments described herein relate generally to a display device.

BACKGROUND

There is a display device that includes a display unit that displays an image, a projector that projects the image displayed by the display unit by using multiple optical elements such as lenses and the like, a reflector that reflects the light projected from the projector toward an eye of a viewer, etc. Such a display device is used as a head mounted display device such as a head mounted display (HMD), etc. For example, the position of the image as viewed by the viewer changes due to the optical path being modified by the design of the display device. Therefore, there are cases where the image is not easy to view. An easily-viewable display is desirable in such a display device.

BRIEF DESCRIPTION OF THE DRAWINGS

FIG. 1 is a schematic view illustrating a display device according to a first embodiment;
FIG. 2 is a schematic perspective view illustrating the reflector;
FIG. 3 is a schematic view illustrating the display device according to the first embodiment;
FIG. 4 is a schematic view illustrating the display device according to the first embodiment;
FIG. 5 is a schematic view illustrating the display device according to the first embodiment;
FIG. 6A to FIG. 6D are schematic views illustrating operations of display devices;
FIG. 7 is a schematic perspective view illustrating the operation of the reflector;
FIG. 8A to FIG. 8C are schematic views illustrating the reflector of the display device according to the first embodiment;
FIG. 9A and FIG. 9B are schematic views illustrating reflectors;
FIG. 10A and FIG. 10B are schematic views illustrating reflectors;
FIG. 11A and FIG. 11B are schematic views illustrating a display device according to a second embodiment; and
FIG. 12 is a schematic view illustrating the display device according to the embodiment.

DETAILED DESCRIPTION

According to one embodiment, a display device includes a light emitter and a reflector. The light emitter emits light including image information. The reflector has a plurality of reflective surfaces arranged in a first direction. The reflective surfaces reflect at least a portion of the light. A length in a second direction of one of the reflective surfaces is longer than a length in the first direction of the one of the reflective surfaces. The second direction intersects the first direction. A first plane is tilted with respect to a second plane. The first plane includes an incident direction of the light at the reflector and a reflection direction of the light at the reflector. The second plane includes the first direction and the second direction. The second direction is tilted with respect to an intersection line between the first plane and the second plane.

According to one embodiment, a display device includes a light emitter and a reflector. The light emitter emits light including image information. The reflector has a plurality of reflective surfaces arranged in a first direction. The reflective surfaces reflect at least a portion of the light. A length in a second direction of one of the reflective surfaces is longer than a length in the first direction of the one of the reflective surfaces. The second direction intersects the first direction. A first plane is tilted with respect to a second plane. The first plane includes a pupil position of a viewer and an incident direction of the light at the reflector. The second plane includes the first direction and the second direction. At least a portion of the light reflected by the reflector travels toward the pupil position.

According to one embodiment, a display device includes a light emitter and a reflector. The light emitter emits light including image information. The reflector has a plurality of reflective surfaces arranged in a first direction. The reflective surfaces reflect at least a portion of the light. A length in a second direction of one of the reflective surfaces is longer than a length in the first direction of the one of the reflective surfaces. The second direction intersects the first direction. The light emitter is held by a holder extending in a third direction. The holder regulates a relative arrangement of the light emitter and the reflector. A first plane is tilted with respect to a second plane. The first plane is parallel to the third direction and includes an incident direction of the light at the reflector. The second plane includes the first direction and the second direction. A reflection direction of the light at the reflector is parallel to the first plane.

Various embodiments will be described hereinafter with reference to the accompanying drawings.

The drawings are schematic or conceptual; and the relationships between the thicknesses and widths of portions, the proportions of sizes between portions, etc., are not necessarily the same as the actual values thereof. Further, the dimensions and/or the proportions may be illustrated differently between the drawings, even in the case where the same portion is illustrated.

In the drawings and the specification of the application, components similar to those described in regard to a drawing thereinabove are marked with like reference numerals, and a detailed description is omitted as appropriate.

First embodiment

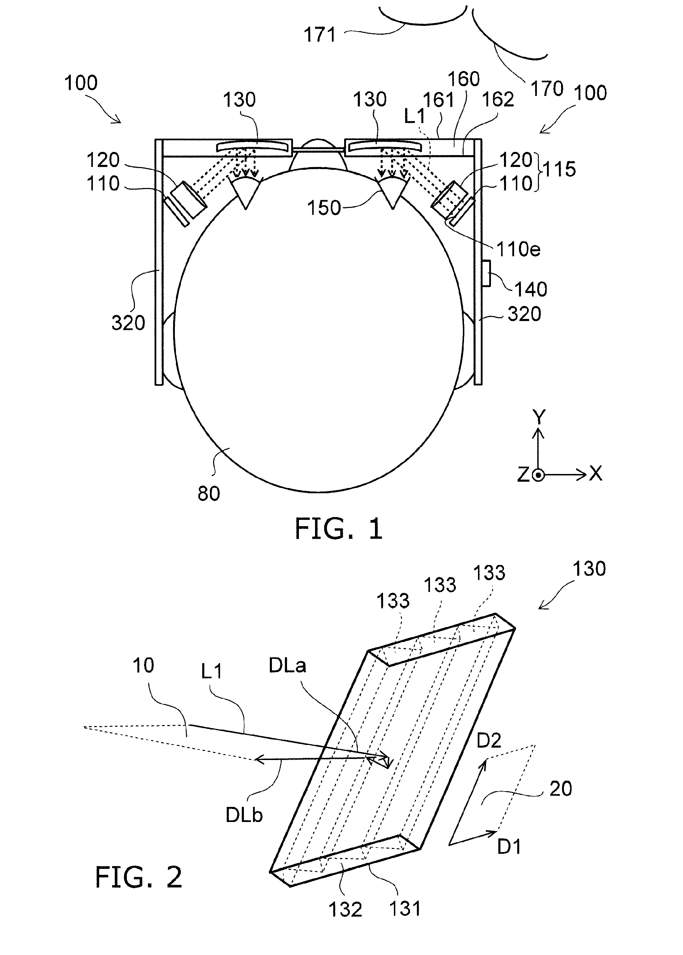

FIG. 1 is a schematic view illustrating a display device according to a first embodiment.

As shown in FIG. 1, the display device 100 includes a light emitter 115, a reflector 130, a processing unit 140, and a holder 320. The light emitter 115 is a projection unit including a display unit 110 and a projector (an optical unit 120).

Image information is input to the display unit 110 from the processing unit 140. The display unit 110 is a display that displays an image. The display unit 110 includes multiple pixels 110e. The multiple pixels 110e are provided to be arranged on a plane and emit light L1 including the image information toward the optical unit 120. The display includes, for example, a liquid crystal, organic EL, liquid crystal on silicon, etc. However, the embodiment is not limited thereto.

The optical unit 120 is provided between the display unit 110 and the reflector 130 in the optical path of the light L1 emitted from the multiple pixels 110e of the display unit 110. The optical unit 120 includes at least one optical element. The optical unit 120 is a projector that projects the light L1 that is incident. The optical element may include a lens, a prism, a mirror, etc. For example, the optical unit 120 changes the travel direction of at least a portion of the light L1. In the case where multiple optical elements are used, the multiple optical elements may not be disposed on a straight line. The reflector 130 is, for example, a multimirror array (MMA).

The reflector 130 reflects at least a portion of the light L1 emitted from the light emitter 115 toward a pupil 150 of a viewer 80. When viewed from the pupil 150, the light that is reflected by the reflector 130 forms an image 171 as a virtual image. Thus, the viewer 80 can view the image.

In the example, the image 171 is displayed as a virtual image at the front of the viewer 80. However, the reflector 130 may display the image as a real image distal to the pupil 150. The image may be displayed like an image 170 at the edge of the visual field of the viewer 80. Thereby, the visual field of the viewer 80 is not obstructed.

The display unit 110, the light emitter 115, and the reflector 130 are held by the holder 320. The holder 320 regulates the relative arrangement of the reflector 130 and the position of the pupil 150 and the relative arrangement of the reflector 130 and the light emitter 115. The holder 320 is, for example, a temple of an eyeglasses frame; and the display device 100 is mountable to the head of the viewer 80 by the holder 320.

It is favorable for the light emitter 115 to be disposed on the inner side of the frame when the viewer 80 wears the display device. In other words, it is favorable for the light emitter 115 to be disposed between the viewer 80 and the holder 320 when the display device 100 is used (worn). Thereby, the viewer can use the display device 100 as normal eyeglasses; and discomfort can be reduced when using the display device.

In the example, the display device 100 further includes an eyeglasses lens 160. For example, the reflector 130 is contained in the eyeglasses lens 160.

The eyeglasses lens 160 has a first surface 161 and a second surface 162. The second surface 162 is separated from the first surface 161. The reflector 130 is provided between the first surface 161 and the second surface 162.

In the embodiment, the reflector 130 may be provided between the light emitter 115 and the eyeglasses lens 160. In other words, the reflector 130 may be provided in front of the eyeglasses lens 160 as viewed by the viewer. The reflector 130 may be disposed at the surface (e.g., the second surface 162) of the eyeglasses lens.

A binocular HMD that uses two display devices 100 is shown in FIG. 1. One of the display devices displays an image toward the right eye of the viewer 80; and the other display device displays an image toward the left eye. The embodiment may be a monocular HMD that displays an image toward one eye using one display device 100.

FIG. 2 is a schematic perspective view illustrating the reflector.

The reflector 130 includes multiple reflective surfaces 133 that reflect at least a portion of the light L1. For example, a reflective layer 132 is provided on a major surface of a substrate 131; and the multiple reflective surfaces 133 are provided on the reflective layer 132.

The multiple reflective surfaces 133 are, for example, multiple fine half mirrors arranged in parallel. Each of the multiple reflective surfaces 133 is tilted with respect to the major surface of the substrate 131. Thereby, the reflection angle can be adjusted.

For example, a direction DLa is the incident direction of the first light L1 at the reflector 130. A direction DLb is the reflection direction of the first light L1 at the reflector 130. A first plane 10 is the plane that includes the incident direction DLa and the reflection direction DLb.

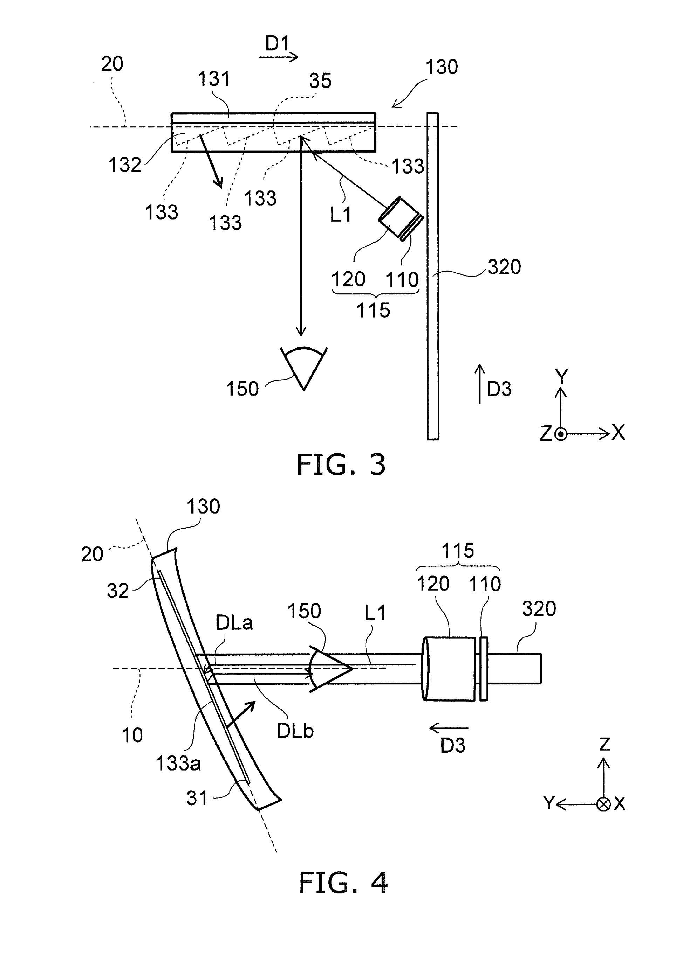

FIG. 3 to FIG. 5 are schematic views illustrating the display device according to the first embodiment.

Here, the direction in which the multiple reflective surfaces 133 are arranged is taken as an X-axis direction.

One direction perpendicular to the X-axis direction is taken as a Y-axis direction. A direction perpendicular to the X-axis direction and perpendicular to the Y-axis direction is taken as a Z-axis direction. For example, the Y-axis direction corresponds to the frontward direction of the viewer 80 and corresponds to the reflection direction DLb or the direction in which the holder 320 extends. The X-axis direction corresponds to the left and right direction (the horizontal direction) of the viewer 80; and the Z-axis direction corresponds to the upward direction (the vertical direction) of the viewer 80.

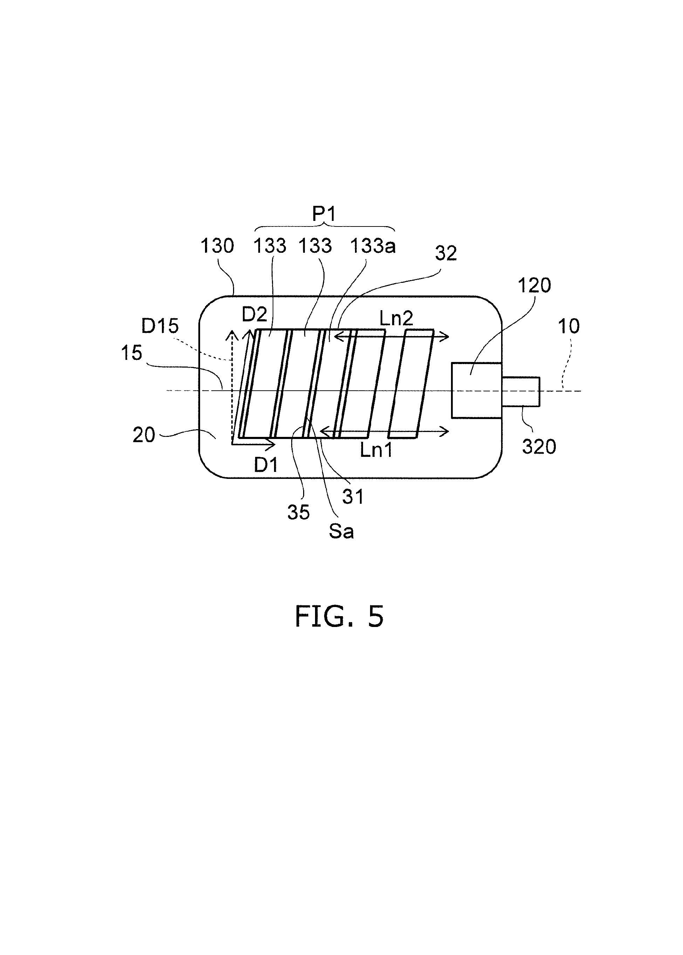

FIG. 3 is a schematic plan view of the X-Y plane; FIG. 4 is a schematic plan view of the Y-Z plane; and FIG. 5 is a schematic plan view of the X-Z plane.

The multiple reflective surfaces 133 are arranged in the first direction (the X-axis direction). For example, as shown in FIG. 5, at least a portion of the multiple reflective surfaces 133 extends in a second direction D2 intersecting a first direction D1. At least a portion of the multiple reflective surfaces 133 has an edge Sa (a side) extending in the second direction D2. In other words, the length in the second direction D2 of at least a portion P1 of the multiple reflective surfaces 133 is longer than the length in the first direction D1 of the at least a portion P1 of the multiple reflective surfaces 133.

In the example, each of the multiple reflective surfaces 133 has the edge Sa extending in a straight line configuration in the second direction D2. In the embodiment, the configuration of the edge that extends in the second direction D2 may be a curved configuration having a gradual curve.

A groove 35 is made along the side (the edge) of the reflective surface 133 between adjacent reflective surfaces 133. In the example, the groove 35 extends in the second direction D2. A second plane 20 is the plane that includes the first direction D1 and the second direction D2. Each of the multiple reflective surfaces 133 is tilted with respect to (non-parallel to) the second plane 20.

For example, as shown in FIG. 4, the first plane 10 is the plane that includes the position of the pupil 150 and the incident direction DLa of the light L1 at the reflector 130. In the example, the first plane 10 is the plane that is substantially parallel to the direction (a third direction D3) in which the holder 320 extends. For example, the first plane 10 is parallel to the X-Y plane.

Although the holder 320 of FIG. 3 has a side extending in a straight line configuration in the third direction D3, the embodiment also includes the case where the configuration of the holder 320 has a gradual curve. The configuration of the holder 320 is modified appropriately by considering the designability and the convenience during use. Also, the embodiment includes the case where the angle between the holder 320 and the reflector 130 is changeable. The third direction D3 is the direction in which the holder 320 extends when the viewer uses the display device 100.

As shown in FIG. 4, the first plane 10 is tilted with respect to the second plane 20. In other words, the first plane 10 intersects the second plane 20 without being orthogonal to the second plane 20. For example, the angle between the first plane 10 and the second plane 20 is not less than 70 degrees but less than 90 degrees.

The multiple reflective surfaces 133 include a first reflective surface 133a. The first reflective surface 133a includes a first edge 31 and a second edge 32. The second edge 32 is separated from the first edge 31 in the second direction D2. The second plane 20 is tilted with respect to the first plane 10 in a direction such that the distance between the second edge 32 and the light emitter 115 is longer than the distance between the first edge 31 and the light emitter 115.

In other words, the distance between the light emitter 115 and the second edge 32 in the Y-axis direction (or the reflection direction DLb) is longer than the distance between the first edge 31 and the light emitter 115 in the Y-axis direction.

As shown in FIG. 5, the second direction D2 is tilted with respect to the X-axis direction and the Z-axis direction when projected onto the Z-X plane.

For example, an intersection line 15 is the intersection line between the first plane 10 and the second plane 20. For example, the intersection line 15 extends along the X-axis direction. The second direction D2 is tilted with respect to the intersection line 15, that is, the second direction D2 intersects the intersection line 15 without being orthogonal to the intersection line 15.

A distance Ln1 along the first direction D1 between the first edge 31 and the light emitter 115 is longer than a distance Ln2 along the first direction D1 between the second edge 32 and the light emitter 115.

As described above, in the embodiment, the second plane 20 is disposed to be tilted with respect to the first plane 10. In other words, the reflective surface of the reflector 130 is disposed to be tilted with respect to the vertical direction (FIG. 4). Further, the direction (the second direction) in which the reflective surface 133 extends is disposed to be tilted in the horizontal direction of the viewer 80 (FIG. 5). The second direction D2 is determined based on the angle between the first plane 10 and the second plane 20. Thereby, as described below, the reflection direction DLb of the light L1 can be adjusted appropriately.

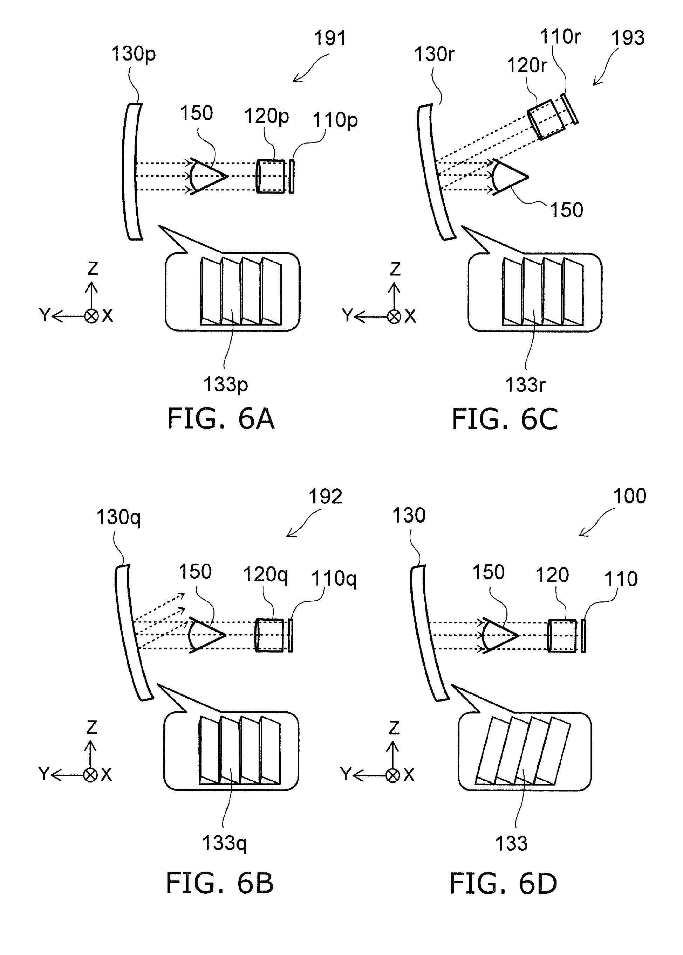

FIG. 6A to FIG. 6D are schematic views illustrating operations of display devices.

FIG. 6A shows a display device 191 of a reference example; FIG. 6B shows a display device 192 of a reference example; and FIG. 6C shows a display device 193 of a reference example. FIG. 6D shows the display device 100 according to the first embodiment.

The display unit, the projector, and the reflector of the display devices 191 to 193 of the reference examples are similar to the display unit 110, the optical unit 120, and the reflector 130 of the display device 100. Compared to the display device 100, the disposition of the reflector or the disposition of the reflective surface is different for the display devices 191 to 193 of the reference examples.

In the display device 191 shown in FIG. 6A, a reflector 130p is provided to be substantially perpendicular to the X-Y plane. In other words, the plane that includes the incident direction and the reflection direction of the light is substantially perpendicular to the major surface of the reflector 130p.

The direction in which a reflective surface 133p extends is not tilted in the horizontal direction of the viewer 80. In other words, the direction in which the reflective surface 133p extends is parallel to the Z-axis direction and does not have an X-axis direction component.

In such a case, when projected onto the Z-Y plane, the reflection direction of the light is antiparallel to the incident direction and travels in the direction of the pupil 150. The design of the optical path is relatively easy in such a display device 191. However, the design as an eyeglasses-type display device is undesirably constrained because the major surface of the eyeglasses lens (the reflector 130p) is substantially parallel to the Z-axis direction. From the perspective of using the design as eyeglasses, it is desirable for the eyeglasses lens to be tilted about 5 to 15 degrees with respect to the Z-axis direction.

In the display device 192 shown in FIG. 6B, a reflector 130q is provided to be tilted with respect to the X-Y plane.

The direction in which a reflective surface 133q extends is not tilted with respect to the horizontal direction of the viewer 80. The direction in which the reflective surface 133q extends does not have an X-axis direction component.

In such a case, the designability as an eyeglasses-type display device is improved compared to the display device 191. On the other hand, when projected onto the Y-Z plane, the reflection direction of the light is a direction intersecting the incident direction. The travel direction of the reflected light has a component in the upward direction of the viewer 80; and the image that is displayed is moved in the upward direction as viewed by the viewer 80. In the case where the tilt of the reflector 130q is large, there are cases where the viewer 80 cannot view a portion of the displayed image.

In the display device 193 shown in FIG. 6C, a reflector 130r is provided to be tilted with respect to the X-Y plane.

The direction in which a reflective surface 133r extends is not tilted with respect to the horizontal direction of the viewer 80. The direction in which the reflective surface 133r extends does not have an X-axis direction component.

In the display device 193, an optical unit 120r is provided to be higher than the position of the pupil 150. The position where the optical unit 120r is disposed is determined based on the tilt of the reflector 130r. When projected onto the Y-Z plane, the optical unit 120r is disposed so that the travel direction of the reflected light at the reflector 130r is in the direction of the pupil 150.

In such a case, the viewer 80 can view the entire displayed image. However, the width in the Z-axis direction of the display device 193 is wider because the optical unit 120r is positioned to be higher. Therefore, the display device 193 is undesirably larger.

In the display device 100 according to the embodiment shown in FIG. 6D, the reflector 130 is tilted with respect to the X-Y plane.

The direction (the second direction D2) in which the reflective surface 133 extends is tilted in an oblique direction as viewed by the viewer 80. In other words, the direction in which the reflective surface 133 extends has an X-axis direction component.

Thereby, for example, when projected onto the Y-Z plane, the reflection direction of the light is antiparallel to the incident direction and travels in the direction of the pupil 150.

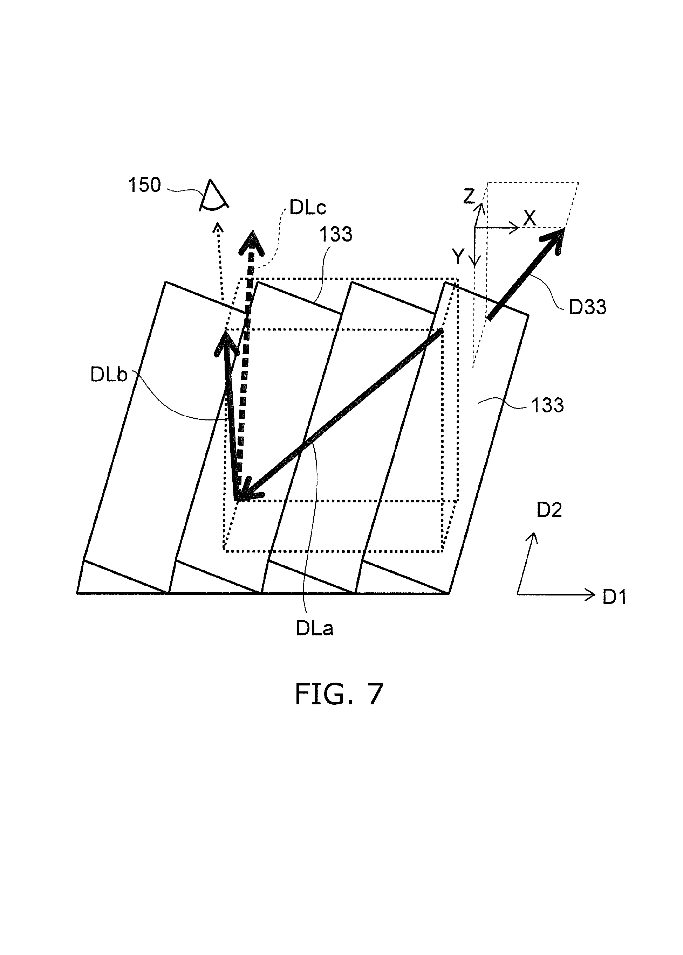

FIG. 7 is a schematic perspective view illustrating the operation of the reflector.

FIG. 7 shows the incident direction DLa and the reflection direction DLb for the reflective surface 133 of the display device 100 according to the embodiment.

As described above, the second plane 20 that includes the first direction D1 and the second direction D2 is tilted with respect to the X-Y plane. The second direction D2 has an X-axis direction component. Thus, a normal direction D33 of the reflective surface 133 can be tilted in the vertical direction (the Z-axis direction) by providing the reflective surface 133. In other words, the normal direction D33 is set to have a Z-axis direction component.

In the case where the reflector 130 is disposed to be tilted with respect to the X-Y plane, the normal direction D33 is tilted according to the tilt of the reflector 130. Thereby, a reflection direction DLc in the case where the normal direction D33 is not tilted in the vertical direction can be corrected. For example, the normal direction D33 is tilted to cancel the fluctuation of the optical path due to the tilt of the reflector 130. Thus, the reflection direction DLb can be set to be in the direction of the pupil 150.

By setting the reflector 130 to be tilted in the display device according to the embodiment, the image can be displayed at the front as viewed by the viewer while ensuring the degrees of freedom of the design and suppressing the enlargement of the device. The position where the image is displayed can be adjusted; and an easily-viewable display can be provided.

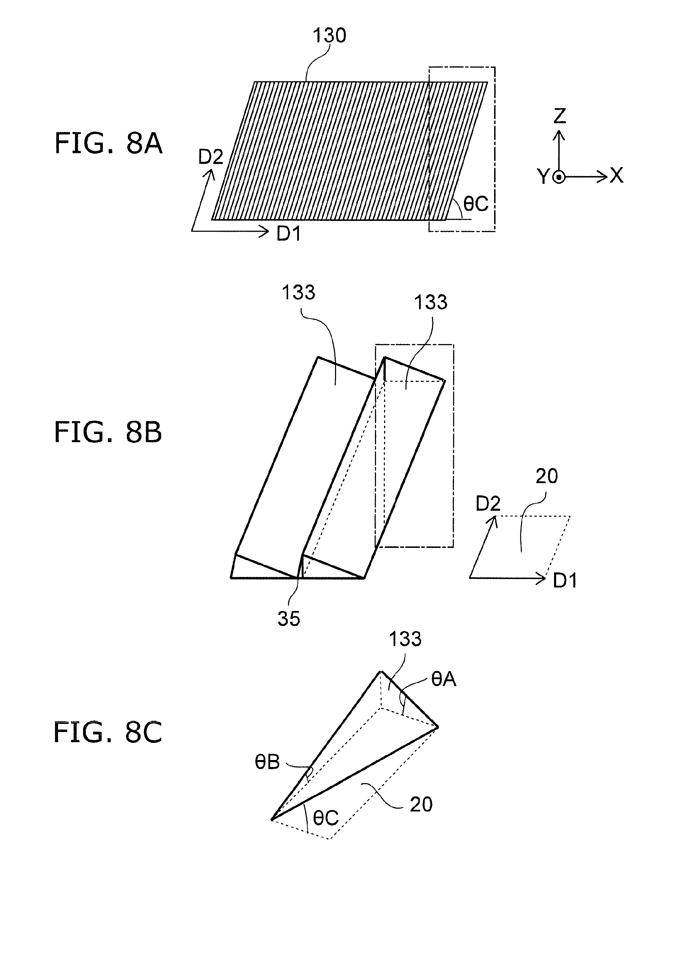

FIG. 8A to FIG. 8C are schematic views illustrating the reflector of the display device according to the first embodiment.

FIG. 8A is a schematic plan view of the reflector 130. FIG. 8B is a schematic perspective view showing a portion of the region enclosed with the broken chain line in FIG. 8A. FIG. 8C is a schematic perspective view showing a portion of the region enclosed with the broken chain line in FIG. 8B.

An angle θA shown in FIG. 8C is the angle between the reflective surface 133 and the X-axis direction. The angle θA is the tilt of the reflective surface 133 in the horizontal direction (the X-axis direction). The angle θA is determined from the arrangement of the optical unit 120 and the MMA.

An angle θB is the angle between the reflective surface 133 and the Z-axis direction. The angle θB is the tilt of the reflective surface 133 in the vertical direction (the Z-axis direction). The angle θB is determined from the tilt of the MMA.

An angle θC is the angle between the first direction D1 and the second direction D2. The angle θC is the tilt angle of the groove 35 of the MMA. The angle θC is determined from the angle θA and the angle θB. For example, the angle θC satisfies the following Formula (1).

$$\theta C = \mathrm{atan}(\tan(\theta A)/\tan(\theta B)) \qquad\qquad (1)$$

Thus, the second direction D2 is determined based on the angle between the second plane 20 and the Z-axis direction (or the X-Y plane). In other words, the second direction D2 is determined based on the angle between the first plane 10 and the second plane 20. The second direction D2 is determined so that at least a portion of the light L1 reflected by the reflector 130 travels toward the position of the pupil 150.

In the manufacturing of the reflector 130, for example, a layer that is used to form the reflective layer 132 is pressed on a substrate 131 such as that shown in FIG. 3. The reflective surface 133 is obtained by vapor-depositing a reflective coating on the layer. Subsequently, the reflector 130 is obtained by cutting the patterned body to match the configuration of the eyeglasses. The tilt (the second direction D2) of the reflective surface 133 can be adjusted in the manufacturing of the reflector 130 according to the embodiment by modifying the cutting direction in the process of cutting to match the configuration of the eyeglasses. Thus, the manufacturing is possible by a relatively easy modification without a loss of productivity.

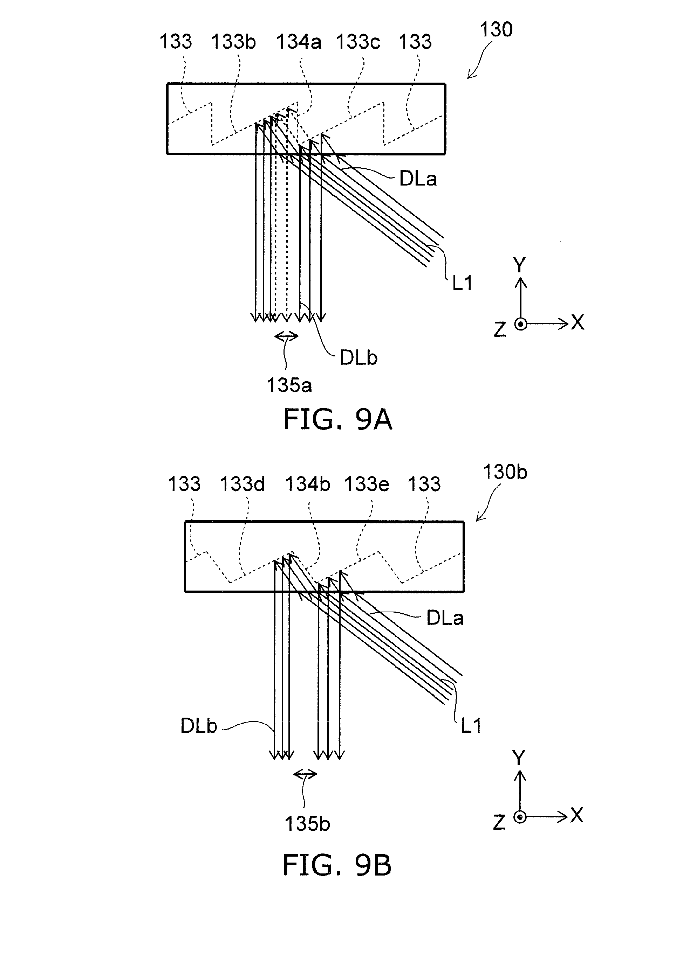

FIG. 9A and FIG. 9B are schematic views illustrating reflectors.

FIG. 9A shows the reflector 130 according to the embodiment and the optical path of the light L1. FIG. 9B shows a reflector 130b according to the embodiment and the optical path of the light L1.

As shown in FIG. 9A, the multiple reflective surfaces 133 have, for example, a reflective surface 133b (a fourth reflective surface) and a reflective surface 133c (a fifth reflective surface). A first side surface 134a connects the reflective surface 133b to the reflective surface 133c. The first side surface 134a is substantially parallel to the reflection direction DLb.

As described above, the reflective surface 133 includes, for example, a half mirror. The half mirror transmits a portion of the light L1 and reflects another portion.

A portion of the light L1 incident on the reflective surface 133c is reflected toward the reflection direction DLb. Another portion of the light L1 incident on the reflective surface 133c passes through the reflective surface 133c and is reflected toward the reflection direction DLb by the reflective surface 133b.

In the reflector 130b as shown in FIG. 9B, the multiple reflective surfaces 133 include a reflective surface 133e and a reflective surface 133d. A side surface 134b connects the reflective surface 133e to the reflective surface 133d. The side surface 134b intersects the reflection direction DLb. Portions of the light L1 passing through the reflective surface 133e are not incident on the reflective surface 133d.

In the embodiment, as in the reflector 130 shown in FIG. 9A, it is favorable for the side surface (the first side surface 134a) to be disposed parallel to the reflection direction DLb. Thereby, the portion of the light passing through one reflective surface is reflected toward the reflection direction DLb by the adjacent reflective surface.

For example, the reflected light reaches a region 135a of FIG. 9A. On the other hand, reflected light does not reach a region 135b of FIG. 9B. By using an arrangement such as that of the reflector 130 of FIG. 9A, the light amount that contributes to the display can be increased.

It is desirable for a reflective coating not to be formed (e.g., vapor-deposited) on the first side surface 134a. For example, it is desirable for the transmittance of the first side surface 134a for the light L1 to be higher than the reflectance of the first side surface 134a to the light L1. Thereby, the light that passes through the reflective surface 133c can be efficiently incident on the reflective surface 133b. The light amount can be increased further.

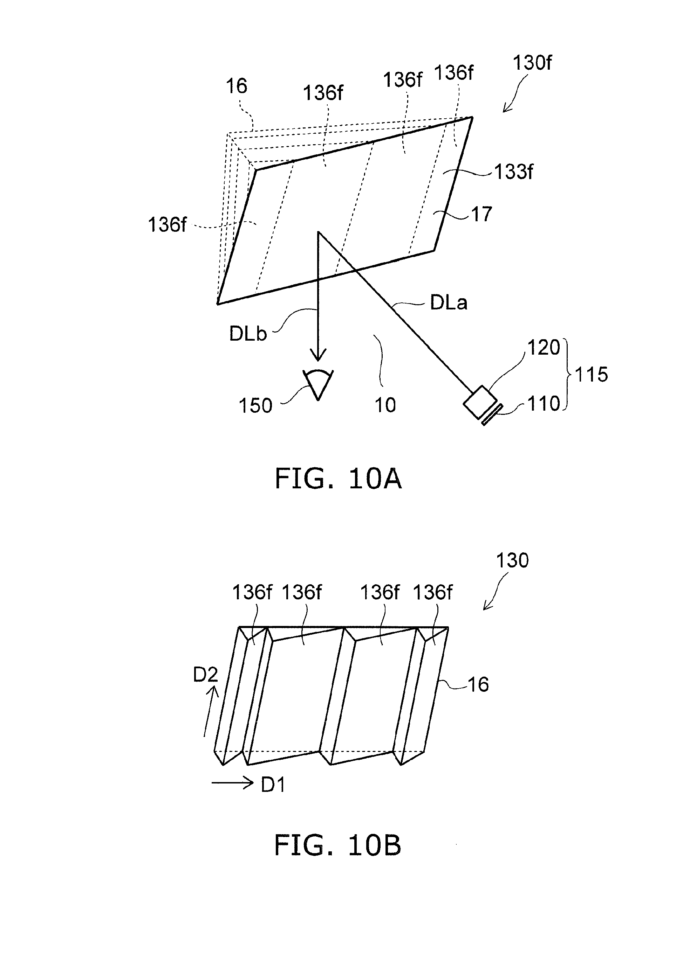

FIG. 10A and FIG. 10B are schematic views illustrating reflectors.

The reflector 130 according to the first embodiment may be considered to have a type of Fresnel structure.

For example, a reflector 130f that is provided on a plane 17 as shown in FIG. 10A is considered. A reflective surface 133f of the reflector 130f has a planar configuration. Here, the plane 17 is disposed so that at least a portion of the light emitted from the optical unit 120 is reflected in the direction of the pupil 150.

Further, a plane 16 that intersects the plane 17 is considered. The plane 16 is, for example, a plane along the eyeglasses lens. The reflective surface 133f having the planar configuration is subdivided into multiple surfaces 136f along a direction parallel to the plane 16. In the example, the reflective surface 133f is subdivided along the broken lines of FIG. 10A.

As shown in FIG. 10B, the multiple surfaces 136f are arranged on the plane 16. Thereby, the reflector 130 that has the tilted reflective surfaces as described above can be obtained. The reflector 130 according to the first embodiment also may be considered to have such a type of Fresnel structure.

Second embodiment

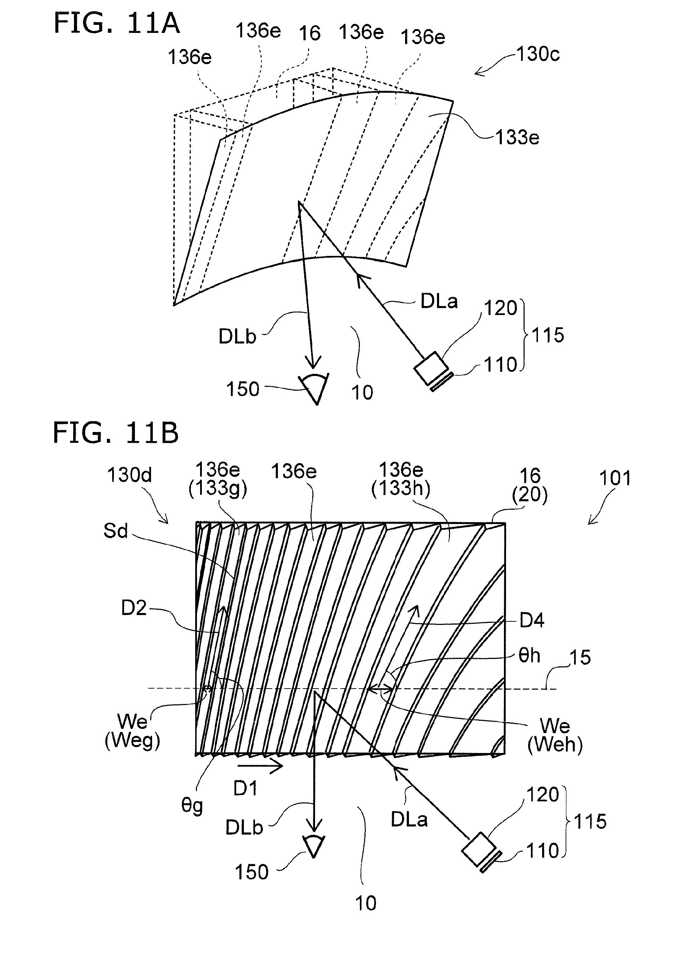

FIG. 11A and FIG. 11B are schematic views illustrating a display device according to a second embodiment.

FIG. 11B is a schematic perspective view showing a reflector 130d of the display device 101 according to the second embodiment. Similarly to the first embodiment, the display unit 110, the optical unit 120, etc., are provided in the display device 101 as well.

For example, the reflector 130d of FIG. 11B is obtained by providing a reflector 130c shown in FIG. 11A with a Fresnel structure. The reflective surface 133e of the reflector 130c is disposed so that at least a portion of the light emitted from the optical unit 120 is reflected in the direction of the pupil 150.

In the reflector 130c of FIG. 11A, the reflective surface 133e has a curvature. The reflective surface 133e has a concave configuration as viewed from the optical unit 120. Thereby, the reflective surface 133e has a refractive power. The refractive power includes not only the power of the refraction of an optical system but also the power of a reflective optical system.

The cross-sectional configuration of the reflective surface 133e is curved in the first plane 10 including the incident direction DLa and the reflection direction DLb. The reflective surface 133e has a refractive power in one direction parallel to the first plane 10. For example, the refractive power is in the left and right direction as viewed by the viewer 80.

Here, the plane 16 that intersects the reflective surface 133e having the concave configuration is considered. The plane 16 is, for example, a plane along the eyeglasses lens. The reflective surface 133e having the concave configuration along a direction parallel to the plane 16 is subdivided into multiple surfaces 136e. In the example, the reflective surface 133e is subdivided along the broken lines of FIG. 11A. For example, the reflective surface 133e is cut at a constant spacing in the depth direction. However, the spacing of the cutting may not be a constant spacing.

The multiple surfaces 136e are arranged on the plane 16 as shown in FIG. 11B. The multiple surfaces 136e are used as the multiple reflective surfaces of the reflector 130d. In the reflector 130d, the plane 16 is the plane (the second plane 20) that includes the first direction D1 and the second direction D2.

The multiple surfaces 136e are arranged in the first direction D1. For example, each of the multiple surfaces 136e is a concave surface as viewed from the optical unit 120. For example, the cross-sectional configuration of each of the multiple surfaces 136e is curved in the first plane 10 including the incident direction DLa and the reflection direction DLb. Thus, the reflector 130d that has a type of Fresnel structure is formed. The multiple surfaces 136e may have a configuration that approximates a plane.

In the example in which the cutting of the surfaces is performed at a constant spacing in the depth direction, a width We along the first direction D1 of each of the multiple reflective surfaces 136e increases as the distance between the reflective surface 136e and the optical unit 120 decreases.

For example, as shown in FIG. 11B, the multiple reflective surfaces 136e include a reflective surface 133g (a second reflective surface) and a reflective surface 133h (a third reflective surface). The distance between the reflective surface 133g and the light emitter 115 is longer than the distance between the reflective surface 133h and the light emitter 115. A width Weh along the first direction of the reflective surface 133h is wider than a width Weg along the first direction of the reflective surface 133g.

Each of the multiple reflective surfaces 136e has a side (an edge Sd) intersecting the first direction D1. The edge Sd has a curved configuration. Each of the multiple reflective surfaces 136e extends in a direction inside the second plane 20. The multiple reflective surfaces 136e include a reflective surface that extends in a direction different from the second direction D2. In the example in which the cutting of the surfaces is performed at a constant spacing in the depth direction, the angle between the intersection line 15 and the direction in which the reflective surface 136e extends decreases as the distance between the reflective surface 136e and the optical unit 120 decreases. The intersection line 15 is the intersection line between the first plane 10 and the second plane 20.

For example, the reflective surface 133g extends in the second direction D2. In other words, the reflective surface 133g has an edge having at least a portion along the second direction D2. The length along the second direction D2 of the reflective surface 133g is longer than the length along the first direction D1 of the reflective surface 133g.

The reflective surface 133h extends in a direction D4 (a fourth direction) inside the second plane 20. In other words, the reflective surface 133 has an edge having at least a portion along the direction D4. The length along the direction D4 of the reflective surface 133h is longer than the length along the first direction D1 of the reflective surface 133h.

An angle θh between the direction D4 and the intersection line 15 is smaller than an angle θg between the second direction D2 and the intersection line 15.

The reflector 130d can be thinner by the reflector being such a Fresnel-type. The reflector 130d (the multiple surfaces (reflective surfaces) 136e) has a refractive power in one direction parallel to the first plane 10.

For example, the optical path length of light emitted from the pixel of the display unit 110 to the pupil 150 is different between the positions where the pixels are provided on the display unit 110. There are cases where aberration occurs due to the difference of the optical path lengths. By the reflector 130c having a refractive power, the aberration can be suppressed; and an easily-viewable display can be obtained.

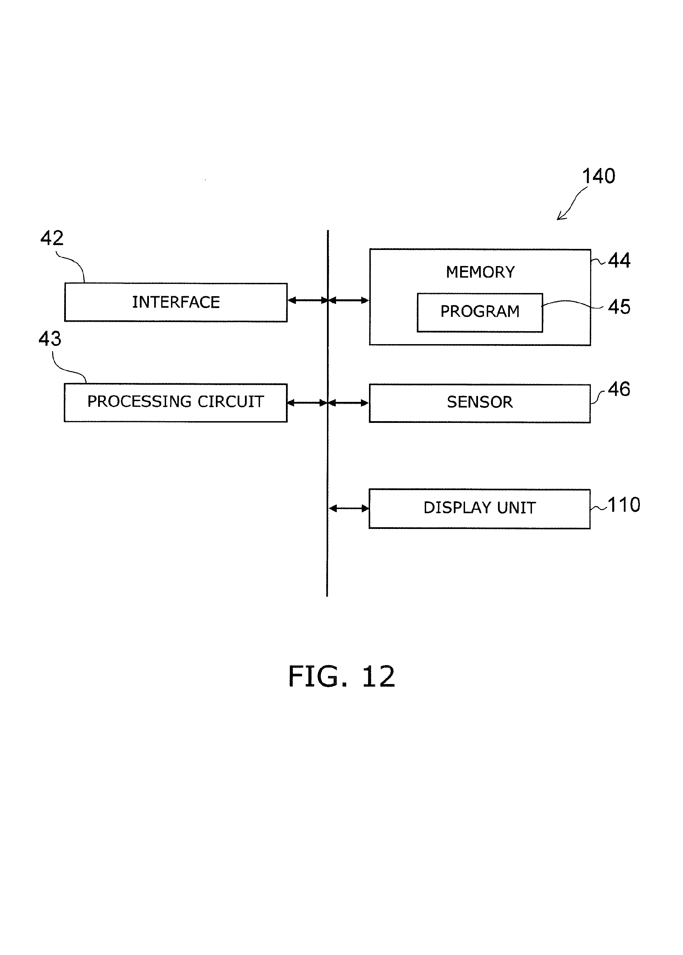

FIG. 12 is a schematic view illustrating the display device according to the embodiment.

FIG. 12 shows an example of the system configuration of the display device according to the embodiment. The example shown in FIG. 12 is an example of the display device according to the embodiment and does not necessarily match the actual module.

As shown in FIG. 12, the processing unit 140 includes, for example, an interface 42, a processing circuit (a processor) 43, and a memory 44.

For example, the processing unit 140 acquires the image information by being connected to an external storage medium and/or a network via the interface 42. A wired or wireless method may be used for the external connection.

For example, a program 45 that processes the acquired image information is stored in the memory 44. For example, the image information is appropriately converted based on the program 45; and thereby, an appropriate display is performed by the display unit 110. The image information may be stored in the memory 44. The program 45 may be provided in the state of being pre-stored in the memory 44, may be provided via a network and/or a storage medium such as CD-ROM, etc., or may be appropriately installed.

The processing unit 140 may include a sensor 46. The sensor 46 may include, for example, any sensor such as a camera, a microphone, a positional sensor, an acceleration sensor, etc. For example, the image that is displayed by the display unit 110 is modified appropriately based on the information obtained from the sensor 46. Thereby, the convenience and ease of viewing of the display device can be improved.

For example, the image information, the information obtained from the sensor 46, etc., are processed based on the program 45 by the processing circuit 43.

Thus, the obtained image information is input to the display unit 110 from the processing unit 140; and the display is performed by the display device.

A portion of each block or each entire block of the processing unit 140 may include an integrated circuit such as LSI (Large Scale Integration), etc., or an IC (Integrated Circuit) chipset. Each block may include an individual circuit; or a circuit in which some or all of the blocks are integrated may be used. The blocks may be provided as a single body; or some blocks may be provided separately. Also, for each block, a portion of the block may be provided separately. The integration is not limited to LSI; and a dedicated circuit or a general-purpose processor may be used.

According to the embodiments, an easily-viewable display device can be provided.

In the specification of the application, "perpendicular" and "parallel" include not only strictly perpendicular and strictly parallel but also, for example, the fluctuation due to manufacturing processes, etc.; and it is sufficient to be substantially perpendicular and substantially parallel.

Hereinabove, embodiments of the invention are described with reference to specific examples. However, the embodiments of the invention are not limited to these specific examples. For example, one skilled in the art may similarly practice the invention by appropriately selecting specific configurations of components such as the display unit, the reflector, the optical unit, the processing unit, the holder, the eyeglasses lens, etc., from known art; and such practice is within the scope of the invention to the extent that similar effects can be obtained.

Further, any two or more components of the specific examples may be combined within the extent of technical feasibility and are included in the scope of the invention to the extent that the purport of the invention is included.

Moreover, all display devices practicable by an appropriate design modification by one skilled in the art based on the display devices described above as embodiments of the invention also are within the scope of the invention to the extent that the spirit of the invention is included.

Various other variations and modifications can be conceived by those skilled in the art within the spirit of the invention, and it is understood that such variations and modifications are also encompassed within the scope of the invention.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

**Claims**

1. A display device (100), comprising:

   a light emitter (115) emitting light including image information; and
   a reflector (130) having a plurality of reflective surfaces (133) arranged in a first direction, the reflective surfaces (133) reflecting at least a portion of the light,
   a length in a second direction of one of the reflective surfaces (133) being longer than a length in the first direction of the one of the reflective surfaces (133), the second direction intersecting the first direction,
   a first plane being tilted with respect to a second plane, the first plane including an incident direction of the light at the reflector (130) and a reflection direction of the light at the reflector (130), the second plane including the first direction and the second direction,
   the second direction being tilted with respect to an intersection line between the first plane and the second plane.

2. The device (100) according to claim 1, wherein at least a portion of the light reflected by the reflector (130) travels toward a pupil position of a viewer viewing an image made of the light.

3. The device (100) according to claim 2, further comprising a holder (320) holding the light emitter (115),
   the holder (320) regulating a relative arrangement of the pupil position and the reflector (130) and regulating a relative arrangement of the reflector (130) and the light emitter (115).

4. The device (100) according to claim 3, wherein
   the device (100) is mountable on the head of the viewer by the holder (320), and
   the light emitter (115) is disposed between the head and the holder (320) when mounted.

5. The device (100) according to claim 2, further comprising a holder (320) holding the light emitter (115) and extending in a third direction,
   the holder (320) regulating a relative arrangement of the pupil position and the reflector (130) and regulating a relative arrangement of the reflector (130) and the light emitter (115),
   the first plane being parallel to the third direction.

6. The device (100) according to any of claims 1-5, wherein the one of the reflective surfaces (133) has a side extending in the second direction.

7. The device (100) according to any of claims 1-6, wherein
   the reflective surfaces (133) has a first reflective surface (133a),
   the first reflective surface (133a) has a first edge (31), and a second edge (32) separated from the first edge (31) in the second direction,
   a distance along the first direction between the first edge (31) and the light emitter (115) is longer than a distance along the first direction between the second edge (32) and the light emitter (115), and
   the second plane is tilted with respect to the first plane to cause a distance between the second edge (32) and the light emitter (115) to be longer than a distance between the first edge (31) and the light emitter (115).

8. The device (100) according to any of claims 1-7, wherein an angle between the first plane and the second plane is not less than 70 degrees but less than 90 degrees.

9. The device (100) according to any of claims 1-8, wherein each of the reflective surfaces (133) has an edge extending in a straight line configuration in the second direction.

10. The device (101) according to any of claims 1-8, wherein each of the reflective surfaces (133) has an edge having a curved configuration intersecting the first direction.

11. The device (101) according to any of claims 1-10, wherein the reflector (130) has a refractive power in a direction in the first plane.

12. The device (101) according to any of claims 1-11, wherein
    the reflective surfaces (133) has a second reflective surface (133g) and a third reflective surface (133h),
    a distance between the second reflective surface (133g) and the light emitter (115) is longer than a distance between the third reflective surface (133h) and the light emitter (115), and
a width along the first direction of the third reflective surface (133h) is wider than a width along the first direction of the second reflective surface (133g).

13. The device (101) according to any of claims 1-12, wherein each of the reflective surfaces (133) is a concave surface.

14. The device (101) according to any of claims 1-13, wherein
the reflective surfaces (133) has a second reflective surface (133g) and a third reflective surface (133h),
the second reflective surface (133g) has an edge, at least a portion of the edge extending in the second direction,
the third reflective surface (133h) has an edge, at least a portion of the edge extending in a fourth direction,
a distance between the second reflective surface (133g) and the light emitter (115) is longer than a distance between the third reflective surface (133h) and the light emitter (115), and
an angle between the fourth direction and an intersection line between the first plane and the second plane is smaller than an angle between the second direction and the intersection line.

15. The device (100) according to any of claims 1-14, wherein
the reflective surfaces (133) has a fourth reflective surface (133b) and a fifth reflective surface (133c),
the reflector (130) further has a first side surface (134a) connecting the fourth reflective surface (133b) to the fifth reflective surface (133c), and
the first side surface (134a) is parallel to the reflection direction.

16. The device (100) according to claim 15, wherein a transmittance of the first side surface (134a) for the light is higher than a reflectance of the first side surface (134a) to the light.

17. The device (100) according to any of claims 1-16, further comprising an eyeglasses lens (160),
the reflector (130) being provided between the light emitter (115) and the eyeglasses lens (160).

18. The device (100) according to any of claims 1-16, further comprising an eyeglasses lens (160) having a first surface (161) and a second surface (162), the second surface (162) being separated from the first surface (161),
the reflector (130) being disposed at the second surface (162).

19. A display device (100), comprising:

a light emitter (115) emitting light including image information; and
a reflector (130) having a plurality of reflective surfaces (133) arranged in a first direction, the reflective surfaces (133) reflecting at least a portion of the light,
a length in a second direction of one of the reflective surfaces (133) being longer than a length in the first direction of the one of the reflective surfaces (133), the second direction intersecting the first direction,
a first plane being tilted with respect to a second plane, the first plane including a pupil position of a viewer and an incident direction of the light at the reflector (130), the second plane including the first direction and the second direction,
at least a portion of the light reflected by the reflector (130) traveling toward the pupil position.

20. A display device (100), comprising:

a light emitter (115) emitting light including image information; and
a reflector (130) having a plurality of reflective surfaces (133) arranged in a first direction, the reflective surfaces (133) reflecting at least a portion of the light,
a length in a second direction of one of the reflective surfaces (133) being longer than a length in the first direction of the one of the reflective surfaces (133), the second direction intersecting the first direction,
the light emitter (115) being held by a holder (320) extending in a third direction,
the holder (320) regulating a relative arrangement of the light emitter (115) and the reflector (130),
a first plane being tilted with respect to a second plane, the first plane being parallel to the third direction and including an incident direction of the light at the reflector (130), the second plane including the first direction and the second direction,
a reflection direction of the light at the reflector (130) being parallel to the first plane.

FIG. 1

FIG. 2

FIG. 3

FIG. 4

FIG. 5

130p 191 150 120p 110p

Z
Y⊗X

133p

FIG. 6A

130r 110r 193 120r 150

Z
Y⊗X

133r

FIG. 6C

130q 192 150 120q 110q

Z
Y⊗X

133q

FIG. 6B

130 100 150 120 110

Z
Y⊗X

133

FIG. 6D

FIG. 7

FIG. 8A

FIG. 8B

FIG. 8C

133  133b  134a  133c  133  130

DLa

L1

Y

Z → X

DLb

135a

## FIG. 9A

133  133d  134b  133e  133  130b

DLa

L1

DLb

Y

Z → X

135b

## FIG. 9B

16  136f  136f  136f  130f

133f

17

136f

DLa

DLb

120  115

150  10  110

# FIG. 10A

130

136f  136f  136f  136f

D2

16

D1

# FIG. 10B

FIG. 11A

FIG. 11B

140

42

INTERFACE

43

PROCESSING CIRCUIT

MEMORY ~44

PROGRAM ~45

SENSOR ~46

DISPLAY UNIT ~110

FIG. 12

Europäisches
Patentamt

European
Patent Office

Office européen
des brevets

## EUROPEAN SEARCH REPORT

Application Number

EP 15 15 8774

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/041691 A1 (PIONEER CORP [JP]; YANAGISAWA TAKUMA [JP]; IMAI TETSUYA [JP]; KIKUCHI) 20 March 2014 (2014-03-20) * abstract; figures 1-12 * | 1-20 | INV. G02B17/00 G02B17/02 G02B27/01 |
| A | US 2012/002295 A1 (DOBSCHAL HANS-JUERGEN [DE] ET AL) 5 January 2012 (2012-01-05) * paragraphs [0094], [0106]; claim 20; figures 6-10,12,17,18,19a,19b * | 1-20 | |
| A | US 8 384 999 B1 (CROSBY DAVID NICHOLAS [GB] ET AL) 26 February 2013 (2013-02-26) * column 7, line 7 - column 9, line 22; figures 1,4,5,7,8,9 * | 1-20 | |

TECHNICAL FIELDS
SEARCHED        (IPC)

G02B

The present search report has been drawn up for all claims

| Place of search | Date of completion of the search | Examiner |
|---|---|---|
| Munich | 15 October 2015 | Casse, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 15 15 8774

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2015

| Patent document cited in search report | Publication date | Patent family member(s) | Publication date |
|---|---|---|---|
| WO 2014041691 A1 | 20-03-2014 | NONE | |
| US 2012002295 A1 | 05-01-2012 | CN 102326112 A | 18-01-2012 |
| | | DE 102009010538 A1 | 26-08-2010 |
| | | EP 2401645 A1 | 04-01-2012 |
| | | US 2012002295 A1 | 05-01-2012 |
| | | US 2013250429 A1 | 26-09-2013 |
| | | US 2015036223 A1 | 05-02-2015 |
| | | WO 2010097442 A1 | 02-09-2010 |
| US 8384999 B1 | 26-02-2013 | NONE | |

EPO FORM P0459